# FASCICULE DE BREVET EUROPEEN

(11) **EP 0 743 738 B1**
(45) Date de publication et mention de la délivrance du brevet: **13.09.2000**
(21) Numéro de dépôt: 96401070.6
(22) Date de dépôt: 15.05.1996
(51) Int. Cl.: H02K 11/04, H02K 19/36

(54) **Alternateur, notamment pour véhicule automobile, comportant un agencement perfectionné de diodes de redressement**
Gleichstromgenerator, insbesondere für Kraftfahrzeug, der eine verbesserte Anordnung für Gleichrichtungsdioden enthält
Alternator, in particular for motor vehicle comprising an improved arrangement of rectifying diodes

(30) Priorité: 17.05.1995 FR 9505858
(43) Date de publication de la demande: 20.11.1996
(73) Titulaire: VALEO EQUIPEMENTS ELECTRIQUES MOTEUR, 94000 Créteil (FR)
(72) Inventeur: Abadia, Roger, 93360 Neuilly Plaisance (FR); Tarrago, Jean-Luc, 94380 Bonneuil S/Marne (FR)
(74) Mandataire: Le Forestier, Eric

(56) Documents cités:
- DE-A- 3 012 636
- FR-A- 2 441 286
- US-A- 5 296 770

## Description

La présente invention concerne d'une façon générale les alternateurs notamment pour véhicules automobiles, et plus particulièrement un nouvel agencement de diodes de redressement d'un tel alternateur au voisinage du palier arrière de celui-ci.

Un alternateur présente généralement une structure composée de deux demi-coquilles ou paliers en métal, chaque palier recevant une extrémité d'un arbre de rotor, et un stator monté fixe sur les paliers.

Un tel alternateur comprend également un circuit de régulation et un jeu de diodes de redressement des tensions alternatives délivrées par les enroulements du stator.

Ces diodes sont en général montées à l'aide d'aménagements appropriés sur l'extérieur de l'un des paliers de l'alternateur, à savoir le palier dit arrière par opposition au palier avant situé du côté de la poulie d'entraînement de l'alternateur.

Une préoccupation lors de la conception d'un alternateur est de faire en sorte que l'agencement des diodes de redressement notamment ne vienne pas exagérément accroître l'encombrement axial de l'alternateur.

Pour réduire cet encombrement, dans le cadre d'un alternateur polyphasé comportant un jeu de diodes côté négatif et un jeu de diodes côté positif, dont les corps sont respectivement reliés à la masse et à une borne de sortie positive de l'alternateur, il est connu d'emmancher à force les diodes côté négatif directement dans le palier arrière de l'alternateur.

Mais il n'en reste pas moins que les diodes côté positif doivent se situer axialement à une certaine distance des diodes côté négatif, et que des moyens de connexion appropriés des diodes aux enroulements de stator de l'alternateur doivent être également logés au voisinage des diodes.

La présente invention vise à réduire encore l'encombrement axial de ce type d'alternateur.

Un objet secondaire de la présente invention est également d'améliorer le refroidissement d'au moins certaines diodes du circuit de redressement.

Elle propose à cet effet un alternateur, notamment pour véhicule automobile, du type comprenant un palier avant et un palier arrière sur lesquels sont fixés des enroulements de stator et recevant à rotation un arbre de rotor, et un circuit de redressement comprenant une pluralité de diodes de puissance comportant chacune un corps généralement cylindrique constituant une première borne de connexion et une queue s'étendant axialement à partir dudit corps et constituant une seconde borne de connexion, les diodes étant réparties en des premières diodes dont le corps est relié à la masse et en des secondes diodes dont le corps est relié à une borne de tension de sortie de l'alternateur, les diodes étant fixées en place par leurs corps, et les premières diodes étant fixées directement sur ou dans le palier arrière de l'alternateur, tandis que les secondes diodes sont fixées sur ou dans un dissipateur en forme générale de plaque électriquement isolé du palier arrière et situé à l'extérieur de celui-ci, caractérisé en ce que la distance entre ledit dissipateur et ledit palier arrière, et la position des secondes diodes sur le dissipateur, sont telles que les queues desdites secondes diodes font saillie dans des ouvertures formées dans le palier arrière.

Des aspects préférés, mais non limitatifs, de l'alternateur selon l'invention sont les suivants :
- les diodes sont fixés en place par emmanchement à force, directement dans le palier arrière pour les premières diodes.
- lesdites ouvertures sont des ouvertures de passage d'air.
- l'alternateur comprend en outre un connecteur de diodes généralement plan s'étendant entre le palier arrière et le dissipateur.
- ledit connecteur est réalisé par surmoulage de matière isolante sur un ensemble de conducteurs généralement plans et en ce qu'il est prévu dans la matière isolante des ouvertures pour le passage des corps de diodes débordant au-delà du palier et du dissipateur.
- lesdites ouvertures formées dans la matière isolante du connecteur sont communes pour deux première et seconde diodes adjacentes.
- le connecteur comporte, en association avec deux diodes adjacentes disposées tête-bêche, un conducteur faisant saillie de part et d'autre du plan dudit connecteur, lesdits parties en saillie étant reliées respectivement aux queues desdites diodes adjacentes.
- ledit connecteur comporte un conducteur plan destiné à assurer la connexion du dissipateur avec un circuit régulateur électronique par contact par pression au niveau d'une vis de montage dudit connecteur.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue partielle en coupe axiale d'un alternateur selon l'invention,
la figure 2 est une vue partielle en coupe d'un détail de l'alternateur, et
la figure 3 est une vue partielle en bout de l'alternateur selon l'invention.

En référence aux dessins, on a représenté une partie d'un alternateur selon l'invention, et en particulier de sa région arrière, à l'opposé de la poulie d'entraînement.

Le palier arrière est globalement désigné par la référence 10. Il comprend une âme cylindrique 11 définissant un logement pour un roulement à billes (non représenté) reçu sur un arbre de rotor 40 portant deux bagues collectrices 41, 42.

L'âme 11 est prolongée radialement par un voile 13 dans lequel sont ménagées des ouvertures d'air 14 de disposition prédéterminée pour le refroidissement de l'alternateur.

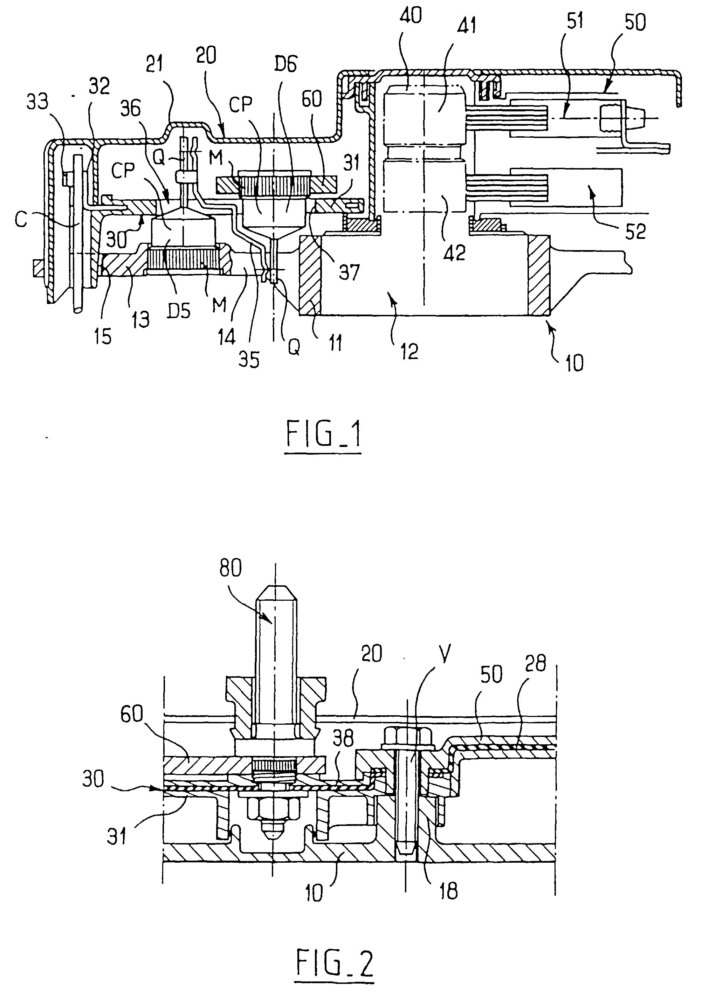

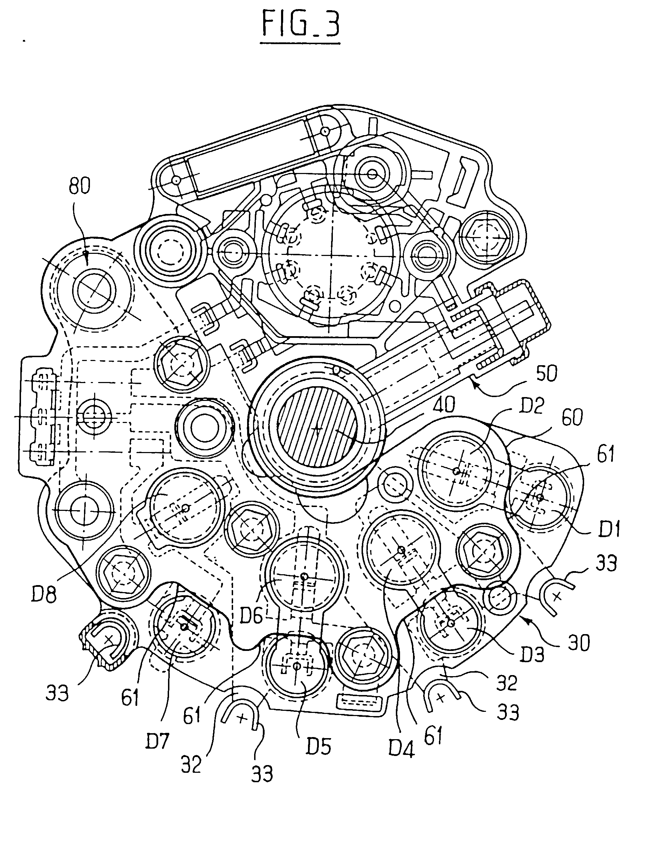

A proximité du bord radialement extérieur du voile 13 sont pratiquées des ouvertures généralement circulaires 15 pour le passage de conducteurs C, convenablement isolés, destinés à relier les phases et le neutre d'un stator triphasé (non représenté) de l'alternateur à un circuit de redressement. Ce circuit de redressement comprend, de façon classique, trois paires de diodes D1, D2, D3, D4, D5 et D6 et une paire de diodes supplémentaires D7, D8 qui sont en l'espèce emmanchées à force, les unes dans des ouvertures formées dans le voile 13 du palier arrière 10 (lui-même à la masse), et les autres dans un support-dissipateur (indiqué en partie en 60 sur la figure 1, et dont les contours sont accentués sur la figure 3) isolé du palier 10, la tension continue de sortie de l'alternateur étant disponible entre la masse et ce dissipateur isolé.

Les diodes sont reliées entre elles et aux conducteurs C par l'intermédiaire d'un connecteur, globalement désigné par la référence 30, comportant un corps en forme générale de plaque 31 en matériau isolant, surmoulé sur un ensemble de conducteurs plats.

Quatre de ces conducteurs, indiqués en 32 et destinés à la connexion électrique avec les conducteurs C, débordent radialement vers l'extérieur en étant aménagés à leurs extrémités libres sous forme de pince-fils 33 pour les conducteurs C.

On a également représenté un élément porte-balais et porte-régulateur 50, incluant notamment deux unités porte-balais 51, 52 au droit des bagues collectrices 41, 42 de l'arbre 40.

L'alternateur comporte également un capot 20 en matériau isolant, conformé de manière à coiffer le palier arrière 10, les diodes D et leur connecteur 30 ainsi que l'élément 50.

Comme le montre la figure 1, chaque diode présente en l'espèce un corps généralement cylindrique CP pourvu d'un moletage M et destiné à être fixé par emmanchement à force dans une ouverture de même diamètre formée soit dans le palier arrière 10 (pour les diodes côté négatif), soit dans le dissipateur positif 60 (pour les diodes côté positif).

Le corps CP de chaque diode constitue une première borne de connexion de celle-ci, tandis que sa seconde borne de connexion est constituée par une queue Q s'étendant axialement à partir du corps CP.

Comme on l'observe sur la figure 1, qui montre la disposition d'une paire de diodes D5, D6, la diode côté négatif D5 est emmanchée dans le palier 10, formant dissipateur négatif, à partir de l'intérieur de celui-ci, et sa queue Q fait saillie à travers une ouverture 36 formée en un emplacement correspondant dans le connecteur plat 30. Cette queue se prolonge au-delà du plan général du dissipateur positif 60, et un dégagement 21 est pratiqué dans le capot 20, en matériau isolant, pour accueillir l'extrémité saillante de ladite queue.

Par ailleurs, la diode côté positif D6 est emmanchée à force dans le dissipateur 60 dans la direction opposée, les deux diodes de la paire adoptant ainsi une position tête-bêche.

La partie du corps CP de la diode D6 qui s'étend, en direction du palier 10, au-delà du dissipateur 60 fait saillie dans une ouverture 37 spécialement formée dans le connecteur 30, cette ouverture 37 pouvant être commune avec l'ouverture 36 précitée. La queue Q de la diode D6 s'étend en direction du palier 10 au-delà du connecteur 30 et, selon une caractéristique de l'invention, pénètre dans l'ouverture de passage d'air 14 formée dans le palier 10 à l'emplacement correspondant.

On comprend que cette disposition permet de diminuer la distance axiale entre la diode D6 et le palier 10, et donc de diminuer l'étendue axiale globale de l'alternateur, dans la mesure ou une partie de la longueur axiale nécessaire pour les diodes côté positif est prise sur le corps de l'alternateur lui-même.

On observera ici que, du fait que les diodes côté négatif se trouvent au droit d'ouvertures 14 de passage d'air de refroidissement, le refroidissement de ces diodes est amélioré.

Bien entendu, la même disposition est adoptée pour les autre paires de diodes, autant d'ouvertures 36, 37 étant formées dans le connecteur 30 et autant d'ouvertures de passage d'air 14 étant formées dans le palier.

Toujours en référence à la figure 1, on observe que les queues Q des deux diodes d'une même paire sont reliées ensemble par un conducteur 35 faisant partie du connecteur 30.

La figure 3 montre que le dissipateur positif 60 comporte, en des emplacements de son bord extérieur correspondant aux différentes diodes côté négatif, des encoches 61 permettant de créer entre ledit dissipateur et les diodes côté négatif l'espacement d'isolement nécessaire.

On a illustré sur la figure 2 un détail du raccordement du dissipateur 60, qui est au potentiel de sortie conventionnellement appelé B+, d'une part à une borne de sortie 80 pour ce potentiel B+, et d'autre part à l'élément 50 portant notamment le circuit électronique de régulation de l'alternateur.

La borne de sortie 80 se présente sous la forme d'une tige filetée 80 qui est moletée à son extrémité intérieure et emmanchée à force dans le dissipateur 60. Un conducteur 38 appartenant au connecteur 30 est également en contact avec la borne 80, et une vis V de montage de l'élément 50 et du connecteur 30, vissée dans un taraudage approprié du palier 10, assure par pression le contact de ce conducteur 38 avec un conducteur 28 lui-même noyé dans l'élément 50 formant porte-balais et porte-régulateur.

Bien entendu, la présente invention n'est nullement limitée aux formes de réalisation décrites et représentées, mais s'applique aussi bien au diodes du type emmanché à force qu'aux diodes brasées ou soudées. Dans ce dernier cas, les diodes côté négatif sont brasées sur un dissipateur rapporté sur le palier arrière et accolé à celui-ci.

## Revendications

1. Alternateur, notamment pour véhicule automobile, du type comprenant un palier avant et un palier arrière (10) sur lesquels sont fixés des enroulements de stator et recevant à rotation un arbre de rotor (40), et un circuit de redressement (D1-D8) comprenant une pluralité de diodes de puissance comportant chacune un corps (CP) généralement cylindrique constituant une première borne de connexion et une queue (Q) s'étendant axialement à partir dudit corps et constituant une seconde borne de connexion, les diodes étant réparties en des premières diodes (D1, D3, D5, D7) dont le corps est relié à la masse et en des secondes diodes (D2, D4, D6, D8) dont le corps est relié à une borne de tension de sortie (B+) de l'alternateur, les diodes étant fixées en place par leurs corps, et les premières diodes étant fixées sur ou dans le palier arrière (10) de l'alternateur, tandis que les secondes diodes sont fixées sur ou dans un dissipateur (60) en forme générale de plaque électriquement isolé du palier arrière et situé à l'extérieur de celui-ci, caractérisé en ce que la distance entre ledit dissipateur (60) et ledit palier arrière (10), et la position des secondes diodes sur le dissipateur, sont telles que les queues (Q) desdites secondes diodes font saillie dans des ouvertures (14) formées dans le palier arrière.

2. Alternateur selon la revendication 1, caractérisé en ce que les diodes sont fixées par emmanchement à force, directement dans le palier arrière (10) pour les premières diodes.

3. Alternateur selon l'une des revendications 1 et 2, caractérisé en ce que lesdites ouvertures (14) sont des ouvertures de passage d'air.

4. Alternateur selon l'une des revendications 1 à 3, caractérisé en ce qu'il comprend en outre un connecteur de diodes (30) généralement plan s'étendant entre le palier arrière (10) et le dissipateur (60).

5. Alternateur selon la revendication 4, caractérisé en ce que ledit connecteur (30) est réalisé par surmoulage de matière isolante (31) sur un ensemble de conducteurs généralement plans et en ce qu'il est prévu dans la matière isolante des ouvertures (36, 37) pour le passage des corps (CP) de diodes débordant au-delà du palier (10) et du dissipateur (60).

6. Alternateur selon la revendication 5, caractérisé en ce que lesdites ouvertures (36, 37) formées dans la matière isolante du connecteur (30) sont communes pour deux première et seconde diodes adjacentes (D5, D6).

7. Alternateur selon l'une des revendications 4 à 6, caractérisé en ce que le connecteur (30) comporte, en association avec deux diodes adjacentes disposées tête-bêche, un conducteur (35) faisant saillie de part et d'autre du plan dudit connecteur, lesdits parties en saillie étant reliées respectivement aux queues (Q) desdites diodes adjacentes.

8. Alternateur selon l'une des revendications 4 à 7, caractérisé en ce que ledit connecteur comporte un conducteur plan (38) destiné à assurer la connexion du dissipateur (60) avec un circuit régulateur électronique (50) par contact par pression au niveau d'une vis (V) de montage dudit connecteur.

## Patentansprüche

1. Wechselstromgenerator, insbesondere für Kraftfahrzeuge, umfassend ein vorderes Lagerschild und ein hinteres Lagerschild (10), an denen Ständerwicklungen befestigt sind und die eine drehend gelagerte Läuferwelle (40) aufnehmen, und eine Gleichrichterschaltung (D1-D8) mit einer Mehrzahl von Leistungsdioden, die jeweils einen allgemein zylindrischen Körper (CP), der eine erste Anschlußklemme bildet, und ein Endstück (Q) umfassen, das sich axial von dem besagten Körper aus erstreckt und eine zweite Anschlußklemme bildet, wobei die Dioden auf erste Dioden (D1, D3, D5, D7), deren Körper mit der Masse verbunden ist, und auf zweite Dioden (D2, D4, D6, D8) verteilt sind, deren Körper mit einer Ausgangsspannungsklemme (B+) des Wechselstromgenerators verbunden ist, wobei die Dioden in ihrer Anbringungsposition durch ihre Körper befestigt sind und wobei die ersten Dioden am oder im hinteren Lagerschild (10) des Wechselstromgenerators befestigt sind, während die zweiten Dioden an oder in einem allgemein plattenförmigen Kühlkörper (60) befestigt sind, der vom hinteren Lagerschild elektrisch isoliert und an dessen Außenseite angeordnet ist, **dadurch gekennzeichnet,** daß der Abstand zwischen dem besagten Kühlkörper (60) und dem besagten hinteren Lagerschild (10) und die Position der zweiten Dioden am Kühlkörper so gewählt sind, daß die Endstücke (Q) der besagten zweiten Dioden in Öffnungen (14) vorstehen, die im hinteren Lagerschild ausgebildet sind.

2. Wechselstromgenerator nach Anspruch 1, **dadurch gekennzeichnet,** daß die Dioden durch festes Einstecken, direkt im hinteren Lagerschild (10) bei den ersten Dioden befestigt sind.

3. Wechselstromgenerator nach einem der Ansprüche 1 und 2, **dadurch gekennzeichnet,** daß die besagten Öffnungen (14) Luftdurchlaßöffnungen sind.

4. Wechselstromgenerator nach einem der Ansprüche 1 bis 3, **dadurch gekennzeichnet,** daß er außerdem einen allgemein ebenen Diodenverbinder (30) umfaßt, der sich zwischen dem hinteren Lagerschild (10) und dem Kühlkörper (60) erstreckt.

5. Wechselstromgenerator nach Anspruch 4, **dadurch gekennzeichnet,** daß der besagte Verbinder (30) durch Aufformen von Isoliermaterial (31) auf einer Gruppe von allgemein ebenen Leitern ausgeführt ist und daß in dem Isoliermaterial Öffnungen (36, 37) für den Durchgang der Diodenkörper (CP) vorgesehen sind, die über das Lagerschild (10) und den Kühlkörper (60) hinaus überstehen.

6. Wechselstromgenerator nach Anspruch 5, **dadurch gekennzeichnet,** daß die besagten im Isoliermaterial des Verbinders (30) ausgebildeten Öffnungen (36, 37) für zwei benachbarte erste und zweite Dioden (D5, D6) gemeinsam vorgesehen sind.

7. Wechselstromgenerator nach einem der Ansprüche 4 bis 6, **dadurch gekennzeichnet,** daß der Verbinder (30) in Verbindung mit zwei entgegengesetzt angeordneten benachbarten Dioden einen Leiter (35) umfaßt, der auf beiden Seiten der Ebene des besagten Verbinders vorsteht, wobei die besagten vorstehenden Teile mit den Endstücken (Q) der besagten benachbarten Dioden verbunden sind.

8. Wechselstromgenerator nach einem der Ansprüche 4 bis 7, **dadurch gekennzeichnet,** daß der besagte Verbinder einen ebenen Leiter (38) umfaßt, der dazu bestimmt ist, den Anschluß des Kühlkörpers (60) an eine elektronische Reglerschaltung (50) durch Druckkontakt an einer Montageschraube (V) des besagten Verbinders herzustellen.

## Claims

1. An alternator, in particular for a motor vehicle, the alternator being of the type comprising a front half-shell and a back half-shell (10) to which stator windings are fixed and rotatably receiving a rotor shaft (40), and a rectifier circuit (D1-D8) comprising a plurality of power diodes each presenting a generally cylindrical body (CP) constituting a first connection terminal with a lead (Q) extending axially from said body and constituting a second connection terminal, the diodes comprising both first diodes (D1, D3, D5, D7) whose bodies are connected to ground and second diodes (D2, D4, D6, D8) whose bodies are connected to an output voltage terminal (B+) of the alternator, the diodes being held in place by means of their bodies, and the first diodes being fixed on or in the back half-shell (10) of the alternator while the second diodes are fixed on or in a dissipating support (60) which is generally in the form of a plate that is electrically insulated from the back half-shell and that is situated outside it, the alternator being characterized in that the distance between said dissipating support (60) and said back half-shell (10), and the positions of the second diodes on the dissipating support are such that the leads (Q) of said second diodes project into openings (14) formed in the back half-shell.

2. An alternator according to claim 1, characterized in that the diodes are fixed by being force-fits, with the first diodes being force-fitted directly in the back half-shell (10).

3. An alternator according to claim 1 or 2, characterized in that said openings (14) are openings for passing air.

4. An alternator according to any one of claims 1 to 3, characterized in that it further includes a generally plane diode connector (30) extending between the back half-shell (10) and the dissipating support (60).

5. An alternator according to claim 4, characterized in that said connector (30) is made by overmolding insulating material (31) on a set of generally plane conductors, and in that openings (36, 37) are provided in the insulating material to pass the bodies (CP) of the diodes where they project beyond the half-shell (10) and the dissipating support (60).

6. An alternator according to claim 5, characterized in that said openings (36, 37) formed in the insulating material of the connector (30) are common for two adjacent first and second diodes (D5, D6).

7. An alternator according to any one of claims 4 to 6, characterized in that, in association with two adjacent diodes disposed head-to-tail, the connector (30) includes a conductor (35) projecting on both sides of the plane of said connector, said projecting portions being respectively connected to the leads (Q) of said adjacent diodes.

8. An alternator according to any one of claims 4 to 7, characterized in that said connector includes a plane conductor (38) designed to connect the dissipating support (60) with an electronic regulator circuit (50) by pressure contact at a screw (V) for mounting said connector.
